# EUROPEAN PATENT APPLICATION

(11) **EP 4 832 616 A1**
(43) Date of publication of application: **28.10.2026**
(21) Application number: 24910687.3
(22) Date of filing: 10.12.2024
(51) Int. Cl.: H04W 72/0453

(54) **SENSING METHOD, COMMUNICATION DEVICE, AND STORAGE MEDIUM**

(30) Priority: 26.12.2023 CN 202311820449
(71) Applicant: ZTE Corporation, Shenzhen, Guangdong 518057 (CN)
(72) Inventor: GUO, Xiaojiang, Shenzhen, Guangdong 518057 (CN); DAI, Qian, Shenzhen, Guangdong 518057 (CN); LI, Ping, Shenzhen, Guangdong 518057 (CN)
(74) Representative: Ziebig Hengelhaupt Intellectual Property Attorneys Patentanwaltskanzlei PartGmbB
(86) International application number: PCT/CN2024/138072
(87) International publication number: WO 2025/139756

(57) **Abstract**

Provided are a sensing method, a communication device, and a storage medium. The sensing method comprises determining at least one target signal, wherein communication resources and sensing resources of the at least one target signal overlap, and the at least one target signal is used for joint sensing; and sending the at least one target signal.

## Description

The present disclosure claims the priority to the Chinese Patent Application No. 202311820449.8 filed on December 26, 2023, the entire content of which is incorporated herein by reference.

### TECHNICAL FIELD

The present disclosure relates to the technical field of communications, and in particular, to a method for sensing, a communication apparatus, and a storage medium.

### BACKGROUND

The integrated sensing and communication technology may enable a traditional communication system to have both communication and sensing functions, and is an important evolution direction of a new generation communication technology. For the sensing function, a signal for sensing generally has characteristics such as a large bandwidth, high time domain and frequency domain resource densities, and a long processing period.

### SUMMARY

In an aspect, the embodiments of the present disclosure provide a method for sensing. The method for sensing includes:
determining at least one target signal, where a communication resource and a sensing resource of the at least one target signal overlap, and the at least one target signal is used for joint sensing; and
transmitting the at least one target signal.

In another aspect, the embodiments of the present disclosure provide a method for sensing. The method for sensing includes:
receiving at least one target signal, where a communication resource and a sensing resource of the at least one target signal overlap, and the at least one target signal is used for joint sensing; and
acquiring sensing information based on the at least one target signal.

In yet another aspect, the embodiments of the present disclosure provide a communication apparatus. The communication apparatus includes: a determining module and a transmitting module;
the determining module is configured to determine at least one target signal, where a communication resource and a sensing resource of the at least one target signal overlap, and the at least one target signal is used for joint sensing detection; and
the transmitting module is configured to transmit the at least one target signal.

In yet another aspect, the embodiments of the present disclosure provide a communication apparatus. The communication apparatus includes: a receiving module and an acquiring module;
the receiving module is configured to receive at least one target signal, where a communication resource and a sensing resource of the at least one target signal overlap, and the at least one target signal is used for joint sensing; and
the acquiring module is configured to acquire sensing information based on the at least one target signal.

In yet another aspect, the embodiments of the present disclosure provide a computer-readable storage medium, where computer program instructions are stored on the computer-readable storage medium, and the computer program instructions, when executed by a processor, implement the method for sensing according to any one of the above aspects.

In yet another aspect, the embodiments of the present disclosure provide a computer program product, where the computer program product includes computer program instructions, and the computer program instructions, when executed by a processor, implement the method for sensing according to any one of the above aspects.

### BRIEF DESCRIPTION OF THE DRAWINGS

In order to more clearly illustrate the technical solutions in the present disclosure, the drawings required to be used in some embodiments of the present disclosure will be briefly introduced below. It is apparent that the drawings described below are merely drawings of some embodiments of the present disclosure, and for those ordinary skilled in the art, they may also obtain other drawings based on these drawings.
FIG. 1 is a schematic diagram of an architecture of a communication system according to some embodiments.
FIG. 2 is a schematic flowchart of a method for sensing according to some embodiments.
FIG. 3 is a schematic diagram of a distribution of a sensing resource according to some embodiments.
FIG. 4 is a schematic diagram of a frequency domain when selecting a target signal according to some embodiments.
FIG. 5 is a schematic diagram of a comb size of jointly-used target signals according to some embodiments.
FIG. 6 is a schematic diagram of a time domain when selecting a target signal according to some embodiments.
FIG. 7 is a schematic flowchart of another method for sensing according to some embodiments.
FIG. 8 is a schematic structural diagram of a communication apparatus according to some embodiments.
FIG. 9 is a schematic structural diagram of another communication apparatus according to some embodiments.
FIG. 10 is a schematic compositional diagram of a communication apparatus according to some embodiments.

### DETAILED DESCRIPTION

The technical solutions in the present disclosure will be clearly and completely described below in conjunction with the drawings in the present disclosure. Apparently, the described embodiments are only a part of the embodiments of the present disclosure, rather than all of the embodiments. Based on the embodiments in the present disclosure, all other embodiments obtained by those ordinary skilled in the art without making creative efforts fall within the protection scope of the present disclosure.

It should be noted that in the present disclosure, expressions such as "exemplarily" or "for example" are used to indicate an example, an illustration, or a description. Any embodiment or design solution described with "exemplarily" or "for example" in the present disclosure should not be interpreted as being more preferred or more advantageous than other embodiments or design solutions. Specifically, the use of expressions such as "exemplarily" or "for example" is intended to present related concepts in a detailed manner.

The following terms such as "first" and "second" are used for descriptive purposes only, and should not be understood as indicating or implying relative importance or implicitly specifying the number of indicated technical features. Thus, a feature defined with "first" or "second" may explicitly or implicitly include one or more of the feature.

In the description of the present disclosure, unless otherwise specified, "/" represents the meaning of "or", for example, A/B may represent A or B. "And/or" herein is only an association relationship for describing associated objects, representing that three relationships may exist, for example, A and/or B may represent: only A, both A and B, and only B. Furthermore, "at least one" means one or more, and "a plurality of/multiple" means two or more.

Integrated sensing and communication empowers a traditional communication system to have both communication and sensing functions, and is an important evolution direction of a new generation communication technology. A signal for sensing generally has characteristics such as a large bandwidth, high time domain and frequency domain resource densities, and a long processing period, and if a dedicated sensing signal is configured in the communication system, relatively large resource overhead will be occupied. A traditional single communication signal occupies a relatively small frequency domain resource, and generally has a processing period of a slot, and if the single communication signal is directly reused for sensing, the sensing capability will be greatly affected.

There are multiple types and flexible configurations of communication signals. If multiple or different types of communication signals can be jointly used for sensing, sensing may be performed without additionally configuring a sensing signal.

Based on this, the embodiments of the present disclosure provide a method for sensing, which implements joint sensing with at least one target signal by determining and transmitting the at least one target signal. The method performs sensing by jointly using a plurality of existing signals, without additionally configuring a dedicated sensing signal, thereby reducing the overhead of sensing resources and improving the utilization rate of spectrum resources.

The present disclosure may be applied to the following scenarios.
1. A scenario where communication and sensing have wide-range coverage, and a base station has a strong multiple-in multiple-out (MIMO) (i.e., simultaneous multi-beam) capability. In this scenario, when a communication signal that may be jointly used does not satisfy a sensing requirement in a spatial domain, a group of sensing signals satisfying the requirement may be additionally generated by MIMO multi-beam, i.e., the spatial domain requirements of sensing and communication are both satisfied by spatial division, and the requirement of sensing on the time domain, frequency domain, power, radio frequency initial phase, etc., of the jointly-used signal may be satisfied by adopting the scheduling limitation, supplementary signal, or limitation of a radio frequency indicator of the base station itself in the present disclosure. For example, in a wide-coverage scenario in a smart city, the urban environment has a high communication resource requirement due to factors such as a high population density, and also has a high sensing resource requirement due to factors such as numerous urban vehicles, numerous pedestrians, and numerous low-altitude unmanned aerial vehicles.
2. A scenario where communication and sensing resources are covered within a limited number of beams in most cases. In this scenario, even if a sensing transmitting end does not have a strong MIMO multi-beam capability, the spatial domain requirement of sensing on the joint signal can be relatively easily satisfied through resource scheduling since communication and sensing are concentrated and covered within a limited number of beams for most of the time, and the requirement of sensing on the time domain, frequency domain, power, radio frequency initial phase, etc., of the jointly-used signal may be satisfied by adopting the scheduling limitation, supplementary signal, or limitation of a radio frequency indicator of the base station itself in the present disclosure. For example, there are line-like coverage scenarios such as expressways, railways, urban main roads, low-altitude air routes, border lines, and indoor scenarios such as a scenario where a relatively small number of beams are required due to relatively wide beams.

In the embodiments of the present disclosure, a network architecture of a communication network (including but not limited to 3G, 4G, 5G, and a future mobile communication network) may include an integrated sensing and communication signal transmitting end (referred to as a sensing and communication transmitting end, for short, for example including but not limited to a base station and a terminal), a communication receiving end (for example including but not limited to a terminal and a base station), and a sensing receiving end (for example including but not limited to a terminal and a base station). The function of the integrated sensing and communication transmitting end is to transmit an integrated sensing and communication signal through a wireless air interface according to a configuration requirement. The function of the communication receiving end is to receive the communication signal and process it to obtain communication information. The function of the sensing receiving end is to receive the integrated sensing and communication signal scattered by a sensing target and perform sensing processing to obtain sensing information.

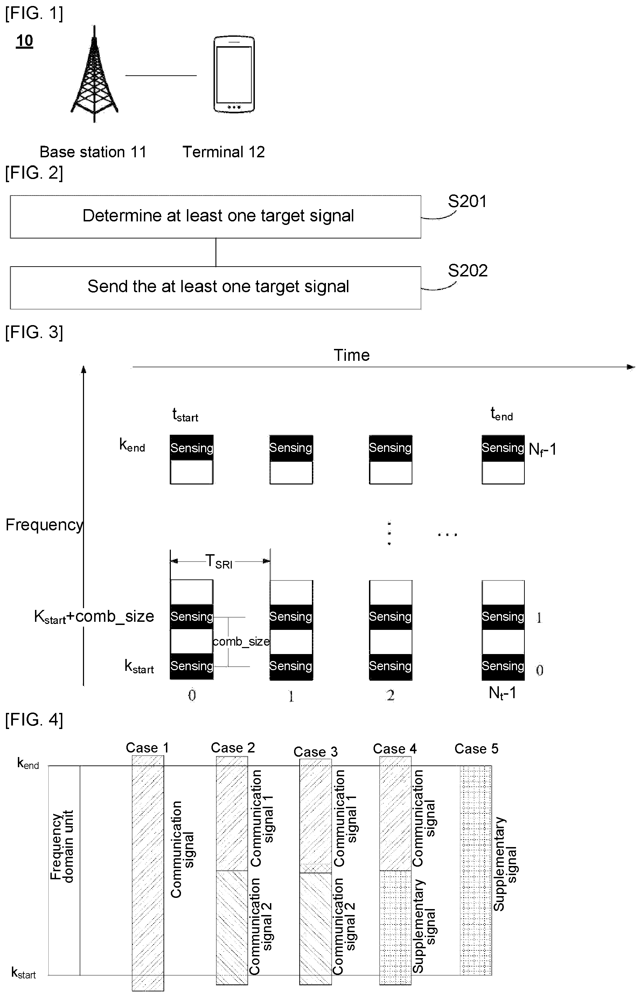

Exemplarily, it is taken as an example where both the integrated sensing and communication signal transmitting end and the sensing receiving end are a base station and the communication receiving end is a terminal, FIG. 1 is a schematic diagram of an architecture of a communication system according to some embodiments. As shown in FIG. 1, a communication system 10 includes a base station 11 and a terminal 12. The base station 11 and the terminal 12 may be in a communication connection.

In some embodiments, the base station 11 is used to provide a wireless access service for a plurality of terminals 12. For example, a base station 11 provides a service coverage region (which may also be referred to as a cell). A terminal 12 entering the region may communicate with the base station 11 through a wireless signal, so as to receive the wireless access service provided by the base station 11. Service coverage regions of base stations 11 may overlap, and a terminal 12 located in the overlapping region may receive wireless signals from the plurality of base stations 11.

In some embodiments, the base station 11 is used to transmit a sensing signal, receive a signal scattered by a sensing target and perform sensing processing to obtain sensing information.

In some embodiments, the base station 11 may be connected to a plurality of terminals 12, and for example, the base station 11 is connected to a terminal 12 and a terminal 12. The terminal 12 and the terminal 12 may be located in a same cell, and the terminal 12 and the terminal 12 may also be located in different cells. That is, a base station 11 may provide a network service for terminals 12 in a cell, or provide a network service for terminals 12 in a plurality of cells simultaneously.

In some embodiments, the base station 11 may be a base station or an evolutional base station (evolutional node B, eNB or eNodeB) in long term evolution (LTE) or long term evolution advanced (LTEA), a base station in a 5G network, or a base station in a future communication system, etc., and the base station may include various network-side devices such as a macro base station, a micro base station, a home base station, a remote radio unit, a reconfigurable intelligent surface (RIS), a router, a wireless fidelity (WIFI) device, or a primary cell and a secondary cell.

In some embodiments, the terminal 12 may be a device with a wireless transceiving function, which may be deployed on land, including indoors or outdoors, being handheld, wearable, or vehicle-mounted; may also be deployed on the water surface (such as ships); and may also be deployed in the air (such as on an airplane, a balloon, a satellite). The terminal may be a mobile phone, a tablet computer (Pad), a computer with a wireless transceiving function, a virtual reality (VR) terminal, an augmented reality (AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenario. The terminal may sometimes also be referred to as a user, user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited in the embodiments of the present disclosure.

In some embodiments, a base station may transmit a sensing signal to sense a target, and meanwhile, the base station may receive an echo signal of the sensing signal from the target, and process the echo signal to obtain sensing information. Alternatively, the base station may transmit a sensing signal to sense a target, and a terminal may receive an echo signal of the sensing signal from the target, and process the echo signal to obtain sensing information.

FIG. 2 is a schematic flowchart of a method for sensing according to some embodiments. Exemplarily, the method for sensing provided in the present disclosure may be applied in the network architecture shown in FIG. 1, for example, may be applied in the base station in FIG. 1.

As shown in FIG. 2, the method for sensing provided in the present disclosure may include: S201 to S202.

In S201: at least one target signal is determined.

A communication resource and a sensing resource of the at least one target signal overlap. The at least one target signal is used for joint sensing.

In S202: the at least one target signal is sent.

In the embodiments of the present disclosure, when sensing needs to be performed, the sensing and communication transmitting end may acquire a sensing resource, and jointly use and transmit at least one target signal according to the sensing resource, thereby implementing the sensing function and communication function for a surrounding target.

In some embodiments, the at least one target signal includes at least one of: a communication signal, a supplementary signal. The communication signal may be a demodulation reference signal (DMRS), a positioning reference signal (PRS), a remote interference management-reference signal (RIM-RS), a channel state information-reference signal (CSI-RS), a sounding reference signal (SRS), a data signal, etc. The supplementary signal may include at least one of: a sensing signal, a signal having a format of a communication signal and not carrying communication information (i.e., a virtual communication signal).

It should be noted that the at least one target signal includes a communication signal, thus, transmitting the at least one target signal may implement both communication and sensing functions.

It should be understood that the virtual communication signal mentioned here refers to a signal generated according to the format of the communication signal (including but not limited to a communication reference signal, a calibration signal, a data signal, etc.), but in fact, the communication signal cannot be used for real information transmission; for example, a reference signal or data signal transmitted to a virtual terminal is configured to assist sensing, but in fact, the virtual terminal does not exist, so the virtual communication signal does not have the information communication capability in the traditional sense. A pure sensing signal includes but is not limited to a linear frequency modulation signal, a phase encoding signal, etc., adopted by a traditional radar.

In some embodiments, the technical solution provided in the present disclosure further includes: determining a sensing resource based on configuration information of the sensing resource.

In some embodiments, the configuration information of the sensing resource includes at least one of: a frequency domain configuration parameter of the sensing resource, a time domain configuration of the sensing resource, and a beam identifier (BeamID) of the sensing resource.

In some embodiments, the frequency domain configuration parameter of the sensing resource includes at least one of: a bandwidth, a starting position in the frequency domain, an ending position in the frequency domain, and a comb size (comb_size). The comb size mentioned here may be understood as a resource element (RE) interval of a signal in the frequency domain, and may be used to represent the frequency domain resource density (frequency resource density) of the signal. When the value of the comb size is comb_size, it represents that there is one and only one valid signal on every comb_size REs at equal intervals.

It should be understood that the ending position in the frequency domain in the frequency domain configuration parameter may also be determined according to the starting position in the frequency domain and the number of REs (or resource blocks) occupied by the sensing resource, or according to the starting position in the frequency domain and the bandwidth.

In some embodiments, the time domain configuration parameter of the sensing resource includes at least one of: a Doppler processing duration, an interval between two continuous time-frequency units in the sensing resource (i.e., a time difference between two adjacent time-frequency units), a position of each time domain unit, a position of a target time domain unit and an interval of another time domain unit relative to the target time domain unit, and a distribution rule of time domain units. The distribution rule of time domain units may be used to indicate a mode in which the time domain units are configured according to a certain non-uniform period, for example, intervals of the time domain units are distributed according to an arithmetic progression.

In some embodiments, the configuration information of the sensing resource is determined by one of: being predefined, being configured by itself, and being configured by another node. That is, the sensing and communication transmitting end may determine the configuration information in a predefined mode. Alternatively, the configuration information is obtained according to a user's input operation. Alternatively, the configuration information transmitted from another nearby node (e.g., a base station) is received.

For example, FIG. 3 is a schematic diagram of a distribution of a sensing resource according to some embodiments. As shown in FIG. 3, a plurality of sensing resource blocks are included, and each sensing resource block of the plurality of sensing resource blocks corresponds to a time domain unit and a frequency domain unit. In the time domain, Nₜ time domain units are included, and numbers from left to right are in sequence 0, 1, ..., Nₜ-1. An interval between two adjacent time domain units is T_{SRI}. In the time domain, a starting position is tₛₜₐᵣₜ, and an ending position is t_{end}. A duration between tₛₜₐᵣₜ and t_{end} is the Doppler processing duration. In the frequency domain, N_{f} frequency domain units are included, and numbers from bottom to top are in sequence 0, 1, ..., N_{f}-1. An interval between two adjacent frequency domain units is comb_size. In the frequency domain, a starting position is kₛₜₐᵣₜ, and an ending position is k_{end}, and a difference between kₛₜₐᵣₜ and k_{end}, multiplied by the comb size, and multiplied by a subcarrier spacing, is the bandwidth.

In some embodiments, power spectral densities of respective target signals among the at least one target signal are same. It should be understood that the purpose of enabling the power spectral densities of the jointly used target signals to be the same is to ensure that the power or SNR of an echo signal corresponding to each target signal of the at least one target signal is basically the same, thereby ensuring that the SNR, peak-to-average ratio, main-to-side lobe ratio, or side lobes, on which sensing Doppler processing has been performed, satisfy the sensing requirement.

In some embodiments, the respective target signals among the at least one target signal are transmitted by using a same spatial domain beam. It should be understood that the purpose of enabling spatial domain beam identifiers of the jointly used target signals to be the same is to ensure that the power of a transmitted signal reaching a target and a background is the same within a sensing resource or Doppler processing duration.

In some embodiments, radio frequency initial phases of the respective target signals among the at least one target signal are same. It should be understood that this limitation that the radio frequency initial phases of the jointly used target signals are the same, is used to satisfy a sensing scenario of A for transmitting and B for receiving, etc., such as a scenario where a base station transmits and a terminal receives or a terminal transmits and a base station receives, and the purpose thereof is to avoid the influence of a radio frequency phase error on the sensing receiving end (for example, in a scenario of A for transmitting and B for receiving, if the radio frequency initial phase of the transmitting end changes, adverse effects such as a reduced SNR, increased side lobes, and broadened main lobe of the sensing target, will be caused when the receiving end performs sensing Doppler processing).

In some embodiments, the communication resource in the frequency domain satisfies at least one of: the communication resource being continuous in the frequency domain; a frequency domain starting position of the communication resource being less than or equal to a frequency domain starting position of the sensing resource; a frequency domain ending position of the communication resource being greater than or equal to a frequency domain ending position of the sensing resource; a bandwidth of the communication resource being greater than or equal to a bandwidth of the sensing resource; a comb size (comb_size) of the communication resource being less than or equal to a comb size of the sensing resource.

It should be noted that, to enable the communication resource to satisfy the above condition(s), the technical solution of the present disclosure may determine the at least one target signal in the following mode.

In some embodiments, the sensing resource includes a plurality of frequency domain units in the frequency domain, and determining the at least one target signal in the above S201, includes step a1 to step c1.

In step a1: for each frequency domain unit of the plurality of frequency domain units included in the sensing resource in the frequency domain, in a case where a communication signal to be transmitted exists on the frequency domain unit, whether a frequency domain resource corresponding to the communication signal to be transmitted covers the frequency domain unit is determined.

In step b1: in a case where a result of the determining is yes, the communication signal to be transmitted is taken as a target signal corresponding to the frequency domain unit.

In step c1: in a case where a result of the determining is no, the communication signal to be transmitted and a supplementary signal are taken as a target signal corresponding to the frequency domain unit.

In some embodiments, in the above step a1, if no communication signal to be transmitted exists, determining the at least one target signal in the above S201 further includes step d1: in a case where the communication signal to be transmitted does not exist on the frequency domain unit, a supplementary signal is taken as a target signal corresponding to the frequency domain unit.

In an implementation, if no available communication signal exists on a certain frequency domain unit (for example, the frequency domain is discontinuous, the frequency domain width is insufficient, etc.), under the premise that the sensing performance requirement is not high or is acceptable, the signal on the frequency domain unit may not be jointly used, and the sensing receiving end is informed through signaling.

It should be noted that, if an available signal exists on each frequency domain unit of the plurality of frequency domain units in the sensing resources, the sensing quality may be ensured. Therefore, if a communication signal to be transmitted exists on the frequency domain unit, but its corresponding frequency domain does not satisfy the frequency domain width of the frequency domain unit, a supplementary signal needs to be added, to enable that frequency domain resources corresponding to the communication signal to be transmitted and the supplementary signal may satisfy the frequency domain width of the frequency domain unit, thereby improving the frequency domain density of the entire sensing signal and improving the sensing performance.

For example, FIG. 4 is a schematic diagram of a frequency domain when selecting a target signal according to some embodiments. As shown in FIG. 4, a width of a frequency domain unit is kₛₜₐᵣₜ - k_{end} in the figure. For Case 1, a communication signal to be transmitted exists on the frequency domain unit, and the frequency domain width corresponding to the communication signal is greater than or equal to the width of the frequency domain unit, so the communication signal may be determined as a target signal. For Case 2, a communication signal 1 and a communication signal 2 exist on the frequency domain unit, and the two communication signals do not overlap in the frequency domain, and it can be seen from the figure that the frequency domain width corresponding to the communication signal 1 and the communication signal 2 is greater than or equal to the width of the frequency domain unit, so the two communication signals may be determined as a target signal. For Case 3, similar to Case 2, except that there is a partial overlap in the frequency domain between the two communication signals. For Case 4, although a communication signal exists, the frequency domain width of the communication signal is less than the width of the frequency domain unit, so a supplementary signal needs to be added, to enable that the frequency domain width corresponding to the communication signal and the supplementary signal is greater than or equal to the width of the frequency domain unit. For Case 5, no communication signal to be transmitted exists, so a supplementary signal may be added, and the frequency domain width of the supplementary signal should be greater than or equal to the width of the frequency domain unit.

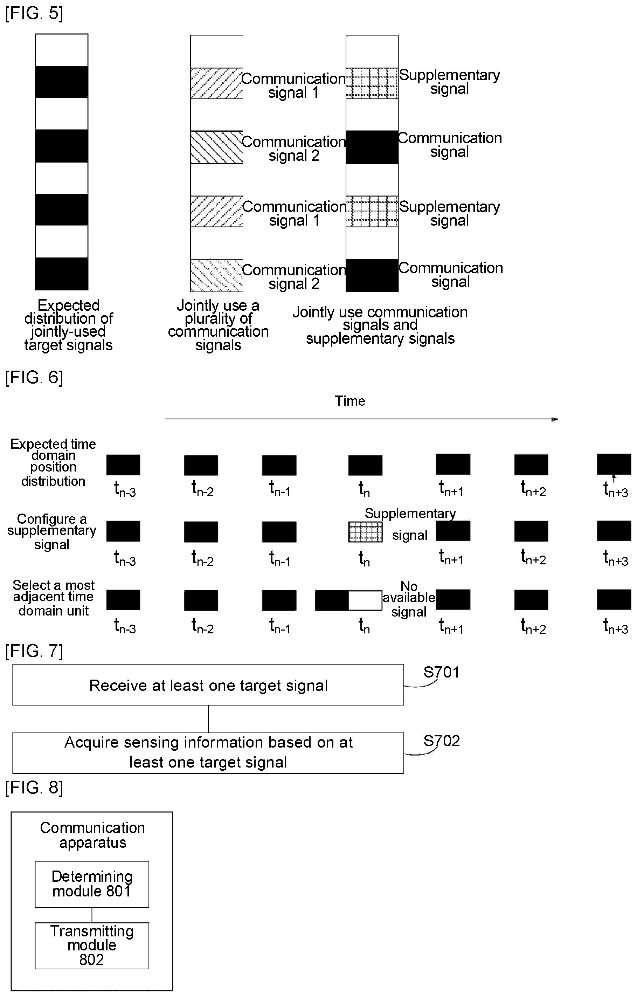

FIG. 5 is a schematic diagram of a comb size of jointly-used target signals according to some embodiments. As shown in FIG. 5, in the frequency domain dimension, the left side is a schematic diagram of an expected distribution of jointly-used target signals, the middle is a schematic diagram of a distribution after a plurality of different communication signals are jointly used, and the right side is a schematic diagram of a distribution after communication signals and supplementary signals are jointly used.

In some embodiments, the sensing resource includes a plurality of first time domain units in the time domain; and determining the at least one target signal in the above S201 includes step a2 to step c2.

In step a2: for each first time domain unit of the plurality of first time domain units included in the sensing resource in the time domain, in a case where a communication signal to be transmitted exists on the first time domain unit, whether a time domain resource corresponding to the communication signal to be transmitted covers the first time domain unit is determined.

Step b2: in a case where a result of the determining is yes, the communication signal to be transmitted is taken as a target signal corresponding to the first time domain unit.

Step c2: in a case where the result of the determining is no, the communication signal to be transmitted and a supplementary signal are taken as a target signal corresponding to the first time domain unit.

In some embodiments, in the above step a2, if no communication signal to be transmitted exists, determining the at least one target signal in the above S201 further includes step d2: in a case where the communication signal to be transmitted does not exist on the first time domain unit, a supplementary signal is taken as a target signal corresponding to the first time domain unit.

In some embodiments, in the above step a2, if no communication signal to be transmitted exists, determining the at least one target signal in the above S201 further includes step e2: in a case where the communication signal to be transmitted does not exist on the first time domain unit, a target signal is determined on a second time domain unit adjacent to the first time domain unit. The second time domain unit is a time domain position most adjacent to the first time domain unit.

In an implementation, if no available communication signal exists on a certain first time domain unit (for example, the frequency domain is discontinuous, the frequency domain width is insufficient, etc.), under the premise that the sensing performance requirement is not high or is acceptable, the signal on the first time domain unit may not be jointly used, and the sensing receiving end is informed through signaling.

For example, the description is provided in conjunction with FIG. 6. The expected time domain position distribution of the jointly-used target signal is shown in FIG. 6, and numbers of time domain units are from tₙ₋₃ to tₙ₊₃. In a scenario, if a signal to be transmitted is absent on a certain time domain unit, or the time domain resource of the signal to be transmitted does not satisfy the condition (for example, the time domain is discontinuous, the time domain length is insufficient, etc.), a supplementary signal needs to be configured. For example, in FIG. 6, an available communication signal is absent on the first time domain unit corresponding to time tₙ, so a supplementary signal is additionally configured to be jointly used. In another scenario, if the signal to be transmitted on a certain time domain unit is unavailable or the time domain unit is occupied by another signal, a communication signal to be transmitted on a most adjacent (previous or next) second time domain unit may be found to be jointly used. For example, in FIG. 6, the signal on the first time domain unit corresponding to time tₙ is unavailable, so the adjacent previous time domain unit is selected to determine a target signal.

FIG. 7 is a schematic flowchart of another method for sensing according to some embodiments. Exemplarily, the method for sensing provided by the present disclosure may be applied in the network architecture shown in FIG. 1, for example, may be applied in the base station in FIG. 1, as a sensing receiving end.

As shown in FIG. 7, the method for sensing provided in the present disclosure may include: S701 to S702.

In S701: at least one target signal is received.

A communication resource and a sensing resource of the at least one target signal overlap, and the at least one target signal is used for joint sensing.

In S702: sensing information is acquired based on the at least one target signal.

In the embodiments of the present disclosure, the sensing receiving end may process the at least one target signal according to a duration corresponding to the sensing resource (e.g., the aforementioned Doppler processing duration), to acquire the sensing information. For example, the sensing information may be positioning information of a sensing target, etc.

Regarding the relevant contents of the target signal and the sensing resource, reference may be made to the relevant description of the sensing transmitting end, and are not repeated herein.

In some embodiments, the communication receiving end may receive the at least one target signal, process the target signal according to the time required by communication (e.g., a slot as a period), to acquire communication information.

The technical solution of the present disclosure will be described below in conjunction with scenarios.

Scenario 1: a sensing base station transmits and the base station receives.

In step 1: the base station selects a target signal according to communication and sensing requirements (i.e., the aforementioned configuration information of the sensing resource), and for example, the bandwidth of the sensing resource is 100 MHz, which is located at a position of carrier 0, an interval of time domain units of the sensing resource is 0.25 ms, the Doppler processing duration of the sensing resource is 32 ms (i.e., a total of 128 sensing signals are required in the time domain), and the comb size of the sensing resource is comb_size = 2, etc.; and available target signals within 32 ms are reasonably allocated, and the communication signal here is one or more types of signals, such as DMRS, PRS, CSI-RS, RIM-RS, a data signal.

In step 2: when the required communication signals within the 32 ms do not satisfy the requirement of the sensing resource, time-frequency resource adjustment may be performed according to the relevant descriptions of the above step a1 to step d1 and step a2 to step e2, so as to enable that the determined at least one target signal may satisfy the requirement of the sensing resource, and scheduling information corresponding to the adjusted time-frequency resource is obtained.

In step 3: the base station transmits the above adjusted scheduling information to the corresponding terminal (which may be one or more different terminals), and then the base station transmits the corresponding target signal on the adjusted time-frequency resource, including but not limited to a communication signal, a supplementary signal, etc.

In step 4: the terminal receives and processes the communication signal according to the scheduling information, to acquire corresponding communication information.

In step 5: the base station receives a sensing signal reflected back from the sensing target, processes the corresponding signal, to acquire sensing information.

Scenario 2: a sensing terminal transmits and the terminal receives.

In step 1: the terminal transmits a communication and sensing jointly used scheduling request to a base station. The base station selects a target signal according to communication and sensing requirements, and for example, the bandwidth of the sensing resource is 200 MHz, which is located at a position of carrier 0, an interval of time domain units of the sensing resource is 0.25 ms, the Doppler processing duration of the sensing resource is 64 ms (i.e., a total of 256 sensing signals are required in the time domain), the comb size of the sensing resource is comb_size = 1, etc., and available target signals within 64 ms are reasonably allocated; the communication signal here is one or more types of signals, such as DMRS, PRS, CSI-RS, RIM-RS, a data signal.

In step 2: when the required communication signals within the 64 ms do not satisfy the requirement of the sensing resource, time-frequency resource adjustment may be performed according to the relevant descriptions of the above step a1 to step d1 and step a2 to step e2, so as to enable that the determined at least one target signal may satisfy the requirement of the sensing resource, and scheduling information corresponding to the adjusted time-frequency resource is obtained.

In step 3: the base station transmits the above adjusted scheduling information to the corresponding terminal, and then the terminal transmits the corresponding target signal on the adjusted time-frequency resource, including but not limited to a communication signal, a supplementary signal, etc.

In step 4: the base station receives and processes the communication signal according to the scheduling information, to acquire corresponding communication information.

In step 5: the terminal receives a sensing signal reflected back from a sensing target, processes the corresponding signal, to acquire sensing information.

Scenario 3: a sensing base station transmits and a terminal receives.

In step 1: The base station selects a target signal according to communication and sensing requirements, and for example, the bandwidth of the sensing resource is 100 MHz, which is located at a position of carrier 0, an interval of time domain units of the sensing resource is 0.25 ms, the Doppler processing duration of the sensing resource is 32 ms (i.e., a total of 128 sensing signals are required in the time domain), the comb size of the sensing resource is comb_size=2, etc., and available target signals within 32 ms are reasonably allocated; the communication signal here is one or more types of signals, such as DMRS, PRS, CSI-RS, RIM-RS, a data signal.

In step 2: when the required communication signals within the 64 ms do not satisfy the requirement of the sensing resource, time-frequency resource adjustment may be performed according to the relevant descriptions of the above step a1 to step d1 and step a2 to step e2, so as to enable that the determined at least one target signal may satisfy the requirement of the sensing resource, and scheduling information corresponding to the adjusted time-frequency resource is obtained.

In step 3: the base station transmits the above adjusted scheduling information to the corresponding terminal, and then the base station transmits the corresponding target signal on the adjusted time-frequency resource, including but not limited to a communication signal, a supplementary signal, etc.

In step 4: the terminal receives and processes the communication signal according to the scheduling information, to acquire corresponding communication information.

In step 5: the terminal receives a sensing signal reflected back from a sensing target, processes the corresponding signal, to acquire sensing information.

Scenario 4: a sensing terminal transmits and a base station receives.

In step 1: the terminal transmits a communication and sensing jointly used scheduling request to the base station. The base station determines to select a signal according to communication and sensing requirements, and for example, the bandwidth of the sensing resource is 100 MHz, which is located at a position of carrier 0, an interval of time domain units of the sensing resource is 0.25 ms, the Doppler processing duration of the sensing resource is 32 ms (i.e., a total of 128 sensing signals are required in the time domain), the comb size of the sensing resource is comb_size = 2, etc., and available target signals within 32 ms are reasonably allocated; the communication signal here is one or more types of signals, such as DMRS, PRS, CSI-RS, RIM-RS, a data signal.

In step 2: when the required communication signals within the 64 ms do not satisfy the requirement of the sensing resource, time-frequency resource adjustment may be performed according to the relevant descriptions of the above step a1 to step d1 and step a2 to step e2, so as to enable that the determined at least one target signal may satisfy the requirement of the sensing resource, and scheduling information corresponding to the adjusted time-frequency resource is obtained.

In step 3: the base station transmits the above adjusted scheduling information to the corresponding terminal, and then the terminal transmits the corresponding target signal on the adjusted time-frequency resource, including but not limited to a communication signal, a supplementary signal, etc.

In step 4: the base station receives and processes the communication signal according to the scheduling information, to acquire corresponding communication information.

Step 5: The base station receives a sensing signal reflected back from a sensing target, processes the corresponding signal, to acquire sensing information.

The method for sensing provided in the embodiments of the present disclosure implements joint sensing with at least one target signal by determining and transmitting the at least one target signal. The method performs sensing by jointly using a plurality of existing signals, without additionally configuring a dedicated sensing signal, thereby reducing the overhead of sensing resources and improving the utilization rate of spectrum resources.

Furthermore, the transmitted target signal includes a communication signal, so the transmitted at least one target signal may be used for both sensing and communication, thereby avoiding mutual exclusion in resources between communication and sensing in the integrated sensing and communication system. In addition, by configuring a supplementary signal based on the sensing resource in the configuration process, the density of the sensing resource may be effectively increased, thereby improving the sensing performance.

It can be understood that, in order to implement the above functions, the communication apparatus (which may be the above sensing and communication transmitting end and sensing receiving end) contains corresponding hardware structures and/or software modules for performing respective functions. Those skilled in the art should easily realize that, in combination with the exemplary algorithm steps described in the embodiments of the present disclosure, the present disclosure can be implemented in the form of hardware or a combination of hardware and computer software. Whether a certain function is performed via the hardware or the computer software-driven hardware depends on the specific application and restrictive conditions on design of the technical solutions. Professional technicians may use different methods to implement the described functions for each specific application, but such implementation should not be considered beyond the scope of the present disclosure.

In the embodiments of the present disclosure, the communication apparatus may be divided into functional modules according to the foregoing method embodiments, for example, may be divided in a way that each functional module corresponds to each function, or two or more functions are integrated into one functional module. The integrated module may be implemented in the form of hardware, or may be implemented in the form of software. It should be noted that the division of the modules in embodiments of the present disclosure is schematic, which is only a logical functional division, and there may be other divisions for in actual implementations. The following is an example of dividing each functional module corresponding to each function.

FIG. 8 is a schematic structural diagram of a communication apparatus according to some embodiments. The communication apparatus may perform the method for sensing provided in the above method embodiments. As shown in FIG. 8, the communication apparatus includes a determining module 801 and a transmitting module 802.

The determining module 801 is configured to determine at least one target signal; a communication resource and a sensing resource of the at least one target signal overlap; and the at least one target signal is used for joint sensing.

The transmitting module 802 is configured to transmit the at least one target signal.

In some embodiments, the at least one target signal includes at least one of: a communication signal, or a supplementary signal; the supplementary signal includes at least one of: a sensing signal, or a signal having a format of the communication signal and not carrying communication information.

In some embodiments, the communication resource in a frequency domain satisfies at least one of: the communication resource being continuous in the frequency domain; a frequency domain starting position of the communication resource being less than or equal to a frequency domain starting position of the sensing resource; a frequency domain ending position of the communication resource being greater than or equal to a frequency domain ending position of the sensing resource; a bandwidth of the communication resource being greater than or equal to a bandwidth of the sensing resource; a comb size of the communication resource being less than or equal to a comb size of the sensing resource; where the comb size is used to represent a frequency domain resource density.

In some embodiments, power spectral densities of respective target signals among the at least one target signal are same.

In some embodiments, respective target signals among the at least one target signal are transmitted by using a same spatial domain beam.

In some embodiments, radio frequency initial phases of respective target signals among the at least one target signal are same.

In some embodiments, the sensing resource includes a plurality of frequency domain units in a frequency domain; and the determining module 801 is configured to: for each frequency domain unit of the plurality of frequency domain units included in the sensing resource in the frequency domain, in a case where a communication signal to be transmitted exists on the frequency domain unit, determine whether a frequency domain resource corresponding to the communication signal to be transmitted covers the frequency domain unit; in a case where a result of the determining is yes, take the communication signal to be transmitted as a target signal corresponding to the frequency domain unit; in a case where a result of the determining is no, take the communication signal to be transmitted and a supplementary signal as a target signal corresponding to the frequency domain unit.

In some embodiments, the determining module 801 is configured to: in a case where the communication signal to be transmitted does not exist on the frequency domain unit, take a supplementary signal as a target signal corresponding to the frequency domain unit.

In some embodiments, the determining module 801 is configured to: the sensing resource includes a plurality of first time domain units in a time domain; and determining the at least one target signal, includes: for each first time domain unit of the plurality of first time domain units included in the sensing resource in the time domain, in a case where a communication signal to be transmitted exists on the first time domain unit, determining whether a time domain resource corresponding to the communication signal to be transmitted covers the first time domain unit; in a case where a result of the determining is yes, taking the communication signal to be transmitted as a target signal corresponding to the first time domain unit; in a case where the result of the determining is no, taking the communication signal to be transmitted and a supplementary signal as a target signal corresponding to the frequency domain unit.

In some embodiments, the determining module 801 is configured to determine the at least one target signal, further including: in a case where the communication signal to be transmitted does not exist on the first time domain unit, taking a supplementary signal as a target signal corresponding to the first time domain unit.

In some embodiments, the determining module 801 is configured to determine the at least one target signal, further including: in a case where the communication signal to be transmitted does not exist on the first time domain unit, determining a target signal on a second time domain unit adjacent to the first time domain unit.

In some embodiments, the determining module 801 is further configured to: determine the sensing resource based on configuration information of the sensing resource.

In some embodiments, the configuration information of the sensing resource includes at least one of: a frequency domain configuration parameter of the sensing resource, a time domain configuration of the sensing resource, and a beam identifier of the sensing resource.

In some embodiments, the frequency domain configuration parameter of the sensing resource includes at least one of: a bandwidth, a starting position in a frequency domain, an ending position in the frequency domain, or a comb size.

In some embodiments, the time domain configuration parameter of the sensing resource includes at least one of: a Doppler processing duration, an interval between two continuous time-frequency units in the sensing resource, a position of each time domain unit, a position of a target time domain unit and an interval of another time domain unit relative to the target time domain unit, or a distribution rule of time domain units.

In some embodiments, the configuration information of the sensing resource is determined by one of: being predefined, being configured by itself, or being configured by another node.

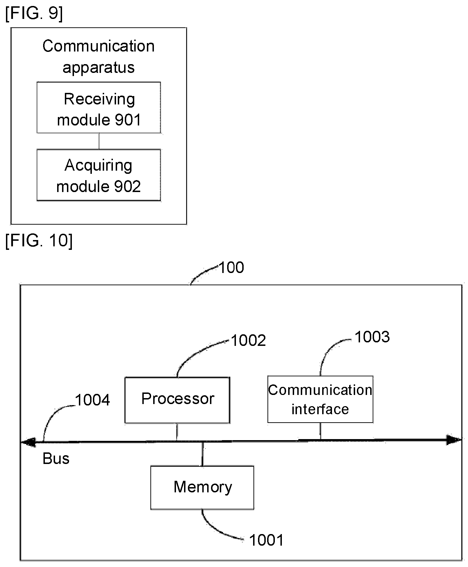

FIG. 9 is a schematic structural diagram of a communication apparatus according to some embodiments. The communication apparatus may perform the method for sensing provided in the above method embodiments. As shown in FIG. 9, the communication apparatus includes a receiving module 901 and an acquiring module 902.

The receiving module 901 is configured to receive at least one target signal; a communication resource and a sensing resource of the at least one target signal overlap; and the at least one target signal is used for joint sensing.

The acquiring module 902 is configured to acquire sensing information based on the at least one target signal.

In some embodiments, the at least one target signal includes at least one of: a communication signal, or a supplementary signal, where the supplementary signal includes at least one of: a sensing signal, or a signal having a format of the communication signal and not carrying communication information.

In a case of implementing the functions of the integrated module mentioned above in the form of hardware, the embodiments of the present disclosure provide another structure of the communication apparatus involved in the above embodiments. As shown in FIG. 10, the communication apparatus 100 includes: a processor 1002 and a bus 1004. In some embodiments, the communication apparatus 100 may further include a memory 1001; and in some embodiments, the communication apparatus 100 may further include a communication interface 1003.

The processor 1002 may implement or execute various illustrative logical blocks, modules and circuits described in conjunction with the embodiments of the present disclosure. The processor 1002 may be a central processing unit, a general-purpose processor, a digital signal processor, an application specific integrated circuit, a field programmable gate array or any other programmable logic device, a transistor logic device, a hardware component, or any combination thereof. It may implement or execute various illustrative logical blocks, modules and circuits described in conjunction with the embodiments of the present disclosure. The processor 1002 may also be a combination capable of implementing computing functions, for example, including a combination of one or more microprocessors, or a combination of a digital signal processor (DSP) and a microprocessor.

The communication interface 1003 is configured to connect with other devices through a communication network. The communication network may be an Ethernet, a radio access network, a wireless local area network (WLAN), or the like.

The memory 1001 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As an implementation, the memory 1001 may exist independently of the processor 1002, and the memory 1001 may be connected to the processor 1002 through the bus 1004, for storing instructions or program codes. When calling and executing the instructions or the program codes stored in the memory 1001, the processor 1002 is capable of realizing the method for sensing provided by the embodiments of the present disclosure.

In another implementation, the memory 1001 may also be integrated together with the processor 1002.

The bus 1004 may be an extended industry standard architecture (EISA) bus or the like. The bus 1004 may be classified into an address bus, a data bus, and a control bus, or the like. For the convenience of representation, only one thick line is used in FIG. 4 for representation, but it does not mean that there is only one bus or one type of bus.

In some embodiments, the memory 1001 stores executable instructions, and when the processor 1002 executes the executable instructions, the communication apparatus is enabled to perform the method for sensing as described in any embodiment of the above embodiments.

Some embodiments of the present disclosure provide a computer-readable storage medium (e.g., a non-transitory computer-readable storage medium) having stored computer program instructions therein, where the computer program instructions, when executed on a computer, cause the computer to perform the method for sensing as described in any one of the above embodiments.

Exemplarily, the computer-readable storage medium may include, but is not limited to a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage media for storing information. The term "machine-readable storage medium" may include, but is not limited to, a radio channel and various other media capable of storing, containing, and/or carrying instructions and/or data.

The embodiments of the present disclosure provide a computer program product including instructions, and the computer program product, when executed on a computer, causes the computer to perform the method for sensing as described in any one of the above embodiments.

The above description is only specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure shall be determined based on the protection scope of the claims.

## Claims

1. A method for sensing, comprising:
determining at least one target signal, wherein a communication resource and a sensing resource of the at least one target signal overlap, and the at least one target signal is used for joint sensing; and
transmitting the at least one target signal.

2. The method according to claim 1, wherein the at least one target signal comprises at least one of: a communication signal, or a supplementary signal, wherein the supplementary signal comprises at least one of: a sensing signal, or a signal having a format of the communication signal and not carrying communication information.

3. The method according to claim 1, wherein the communication resource in a frequency domain satisfies at least one of:
the communication resource being continuous in the frequency domain;
a frequency domain starting position of the communication resource being less than or equal to a frequency domain starting position of the sensing resource;
a frequency domain ending position of the communication resource being greater than or equal to a frequency domain ending position of the sensing resource;
a bandwidth of the communication resource being greater than or equal to a bandwidth of the sensing resource;
a comb size of the communication resource being less than or equal to a comb size of the sensing resource; wherein the comb size is used to represent a frequency domain resource density.

4. The method according to claim 1, wherein power spectral densities of respective target signals among the at least one target signal are same.

5. The method according to claim 1, wherein respective target signals among the at least one target signal are transmitted by using a same spatial domain beam.

6. The method according to claim 1, wherein radio frequency initial phases of respective target signals among the at least one target signal are same.

7. The method according to claim 1, wherein the sensing resource comprises a plurality of frequency domain units in a frequency domain; and determining the at least one target signal, comprises:
for each frequency domain unit of the plurality of frequency domain units comprised in the sensing resource in the frequency domain, in a case where a communication signal to be transmitted exists on the frequency domain unit, determining whether a frequency domain resource corresponding to the communication signal to be transmitted covers the frequency domain unit;
in a case where a result of the determining is yes, taking the communication signal to be transmitted as a target signal corresponding to the frequency domain unit;
in a case where a result of the determining is no, taking the communication signal to be transmitted and a supplementary signal as a target signal corresponding to the frequency domain unit.

8. The method according to claim 7, wherein determining the at least one target signal, further comprises:
in a case where the communication signal to be transmitted does not exist on the frequency domain unit, taking a supplementary signal as a target signal corresponding to the frequency domain unit.

9. The method according to claim 1, wherein the sensing resource comprises a plurality of first time domain units in a time domain; and determining the at least one target signal, comprises:
for each first time domain unit of the plurality of first time domain units comprised in the sensing resource in the time domain, in a case where a communication signal to be transmitted exists on the first time domain unit, determining whether a time domain resource corresponding to the communication signal to be transmitted covers the first time domain unit;
in a case where a result of the determining is yes, taking the communication signal to be transmitted as a target signal corresponding to the first time domain unit;
in a case where the result of the determining is no, taking the communication signal to be transmitted and a supplementary signal as a target signal corresponding to the first time domain unit.

10. The method according to claim 9, wherein determining the at least one target signal, further comprises:
in a case where the communication signal to be transmitted does not exist on the first time domain unit, taking a supplementary signal as a target signal corresponding to the first time domain unit.

11. The method according to claim 9, wherein determining the at least one target signal, further comprises:
in a case where the communication signal to be transmitted does not exist on the first time domain unit, determining a target signal on a second time domain unit adjacent to the first time domain unit.

12. The method according to claim 1, further comprising:
determining the sensing resource based on configuration information of the sensing resource.

13. The method according to claim 12, wherein the configuration information of the sensing resource comprises at least one of: a frequency domain configuration parameter of the sensing resource, a time domain configuration of the sensing resource, and a beam identifier of the sensing resource.

14. The method according to claim 13, wherein the frequency domain configuration parameter of the sensing resource comprises at least one of:
a bandwidth, a starting position in a frequency domain, an ending position in the frequency domain, or a comb size.

15. The method according to claim 13, wherein the time domain configuration parameter of the sensing resource comprises at least one of:
a Doppler processing duration, an interval between two continuous time-frequency units in the sensing resource, a position of each time domain unit, a position of a target time domain unit and an interval of another time domain unit relative to the target time domain unit, or a distribution rule of time domain units.

16. The method according to claim 12, wherein the configuration information of the sensing resource is determined by one of: being predefined, being configured by itself, or being configured by another node.

17. A method for sensing, wherein the method is applied to a receiving end, and comprises:
receiving at least one target signal, wherein a communication resource and a sensing resource of the at least one target signal overlap, and the at least one target signal is used for joint sensing; and
acquiring sensing information based on the at least one target signal.

18. The method according to claim 17, wherein the at least one target signal comprises at least one of: a communication signal, or a supplementary signal, wherein the supplementary signal comprises at least one of: a sensing signal, or a signal having a format of the communication signal and not carrying communication information.

19. A communication apparatus, comprising: a processor, and a memory for storing instructions executable by the processor;
wherein the processor is configured to execute the instructions, enabling the communication apparatus to perform the method for sensing according to any one of claims 1 to 16, or the method for sensing according to any one of claims 17 to 18.

20. A computer-readable storage medium, wherein computer instructions are stored on the computer-readable storage medium, enabling a communication apparatus to perform the method for sensing according to any one of claims 1 to 16, or the method for sensing according to any one of claims 17 to 18.
